# EUROPEAN PATENT APPLICATION

(11) **EP 3 376 058 A1**
(43) Date of publication of application: **19.09.2018**
(21) Application number: 18151423.3
(22) Date of filing: 12.01.2018
(51) Int. Cl.: F16B 13/06

(54) **A DOWEL**

(30) Priority: 14.03.2017 TR 201703872
(71) Applicant: Kutaylar Yapi Malz.Ins.Tur.Ve Gida Urun San. Ve Tic.Ltd.Sti, Istanbul (TR)
(72) Inventor: Tamer, AYDOS, ISTANBUL (TR)
(74) Representative: Dericioglu Kurt, Ekin

(57) **Abstract**

The present invention relates to a reusable dowel which can be used in deep and shallow holes designed to be used especially in glass-like and ceramic sanitary wares, provides expansion from both ends, and essentially comprises at least one main piece, at least one upper clamping piece, at least one lower clamping piece, a plurality of grooves, a plurality of vertical protrusions, a plurality of horizontal protrusions, a plurality of conical surfaces, a plurality of conical parts, and an elastic member.

## Description

### Field of the Invention

The present invention relates to a reusable dowel which is for use especially in parts of ceramic and glass and such sanitary wares having different structural features, and which can be used in holes on different surfaces, different sizes and different depths.

### Background of the Invention

Nowadays, various dowels are placed in the hole for holes that cannot be directly screwed, or for a stronger grip on the surface of the screw. For this purpose, dowels which are generally manufactured from polymer material and utilize the elasticity of these materials are used. Such dowels have rigidity and at least partially elasticity properties.

In the current applications, generally, dowels providing attachment by means of expanding the structure outwards or the dowel legs opening outwards, if present, utilizing the elasticity properties of the main dowel structure are used with the effect of high contact pressure generated during pulling a conical nut-like piece manufactured from a metal or polymer material into a main dowel part in communication with a screw or a bolt.

In the state of the art, dowels that are used together with ceramic sanitary wares such as toilet and sink are considered. Because, there are varieties in holes made for mounting different objects to ceramic sanitary wares via the dowels. Structurally, the holes made in areas with narrow wall thickness have shallow depths. The depth values of holes formed with structural connections are large. In terms of surface roughness, there are smooth holes having glass-like ceramic surface and rough holes having ceramic surfaces that are not glass-like. In practice different kinds of dowels are utilized in order to perform mounting by using holes with different properties. For example, in the case of a hole with a small depth, it is preferred to use dowels generally manufactured from one of relatively rigid polymer or metal material with legs openable to the outside, which can create a high contact pressure on the bottom edge of the hole, taking into account the axial retraction force on the dowel, whereas inflating dowels manufactured from rubber, silicone or elastomer and derivative materials having high elasticity may be preferred in deep holes.

High contact pressure transferred to the dowel while retracting a nut-like part manufactured from metal or rigid polymer material with a screw/bolt is not enough in the hole where the dowel the main body material of which is quite flexible is mounted, the dowel cannot be attached in the hole since the contact pressure between the dowel main body and the hole is insufficient. The said functional problem generally occurs under the effect of loads generated in direction of the middle axis of the dowel having a generally cylindrical structure and trying the dowel to pull outside.

In dowels the main body of which is formed of a relatively rigid polymer material, the mounting is performed by obtaining high contact pressure inside the hole or at the rim of the hole by the nut-like part retracted with screw or bolt extending the leg-like extensions of the dowel outwards. The mounting is usually carried out under high contact pressures over the yield stress value of the main dowel body material. In this case, the permanent deformation of the part is experienced, and in some cases the breaking stress limit is exceeded and thus the main piece of the dowel becomes broken and unusable. Therefore, these types of dowels are often disposable and need to be replaced with new ones when they are demounted. However, in mountings made with this type of dowel, high rigidity is provided in terms of function, and stability can be obtained in terms of the forces that cause the dowel outwards pulling effect on the dowel axis.

Another problem that is known in the art is that the nut-like parts that clamp the dowels fail to attach on the surface they are clamped to, even though special precautions have been taken, and that the screwing or unscrewing operations fail because they start to rotate with the screw/bolt.

European Patent Document no EP1285173B1, an application known in the state of the art, discloses an expansion anchor that can be fixed to a panel type building material. The inventive expandable anchor essentially comprises a body, expansion tongues with the retraction of the body, and sleeve. The body has an expansion cone therein, and a snap-fit connection for the tongues. The sleeve comprises a surface applying pressure on the hole thereon, and protrusions preventing rotation. When the said system is unscrewed from the hole, it is insufficient to return to its initial state before mounting, and it does not have expansion and attachment ability from two ends of the body in holes with higher depth.

United States Patent Document no US7857563B2, an application known in the state of the art, discloses a blind bolt fastener having a core bolt. The inventive core bolt essentially comprises a body with conical surface, body head, screw head, a nut fitting into the wrenching part of the screw and comprising protrusions, and a threaded sleeve. The said configuration is also insufficient in obtaining a result that is reusable in holes with different structures.

### The Problems Solved with the Invention

The objective of the present invention is to provide a dowel which allows the mounting of an object by using both holes present on plate-like structures having a certain wall thickness measurements and deep holes without certain depth limits. For this purpose, it is enabled to perform expansion from both ends of the dowel. The inventive dowel can easily be removed after mounting and reused again. Another objective of the present invention is to provide a dowel which is for connecting/removing accessory pieces especially on ceramic sanitary wares and which can be reused in performing these.

### Detailed Description of the Invention

A dowel developed to fulfill the objectives of the present invention is illustrated in the accompanying figures, in which:

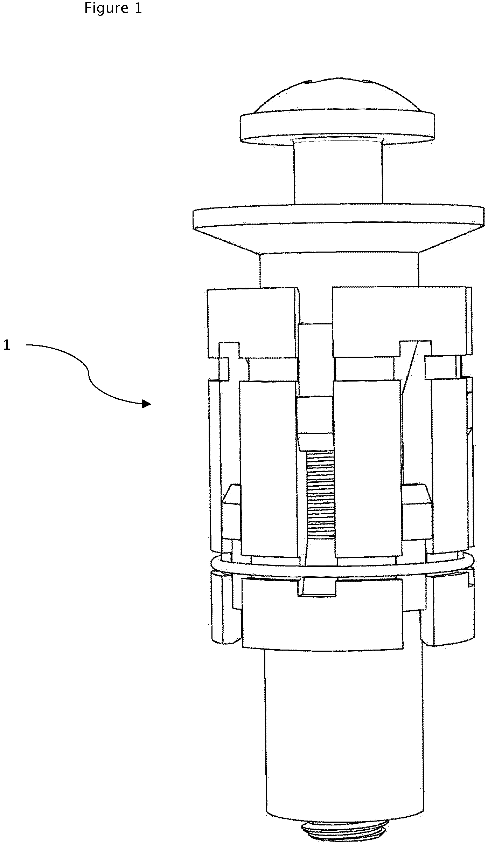

Figure 1 is the view of the inventive dowel.

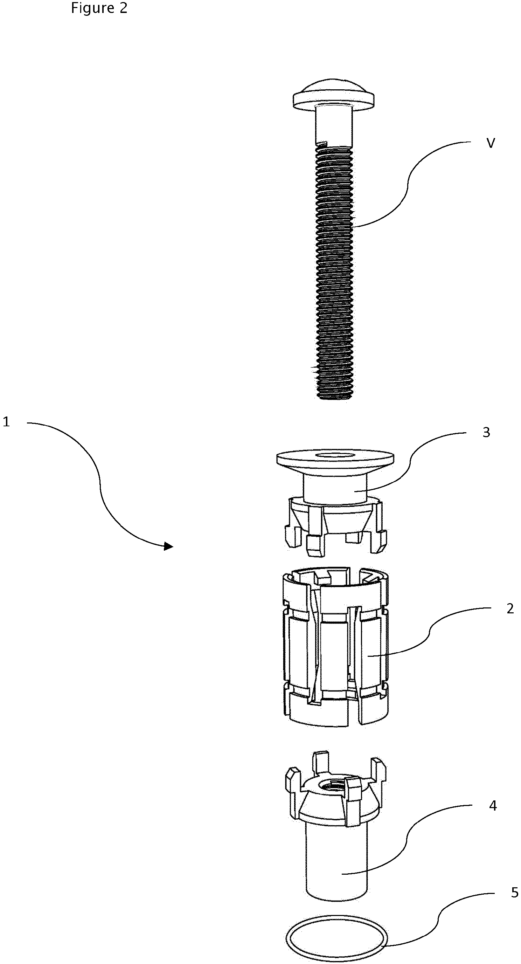

Figure 2 is the exploded perspective view of the inventive dowel.

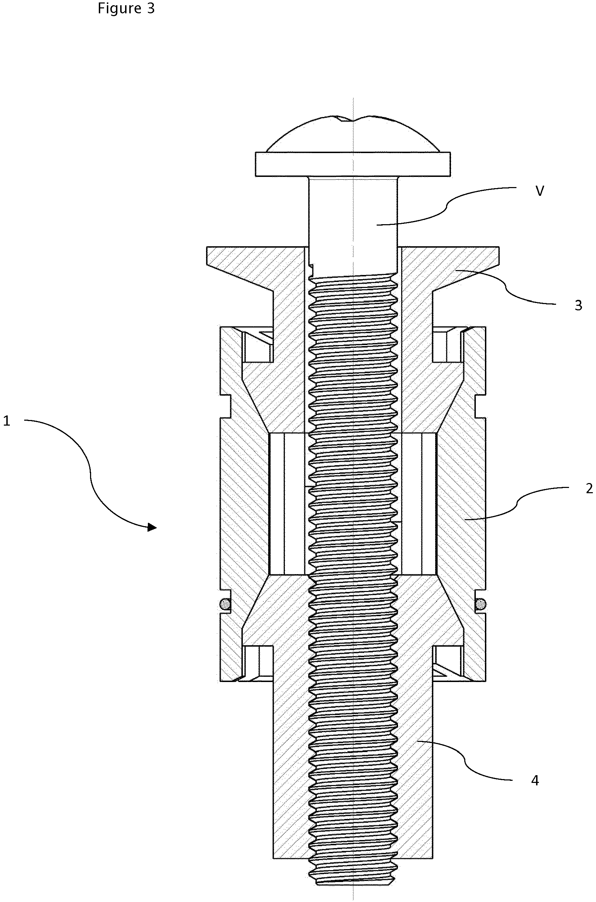

Figure 3 is an angular cross-sectional view of the inventive dowel in the attached state.

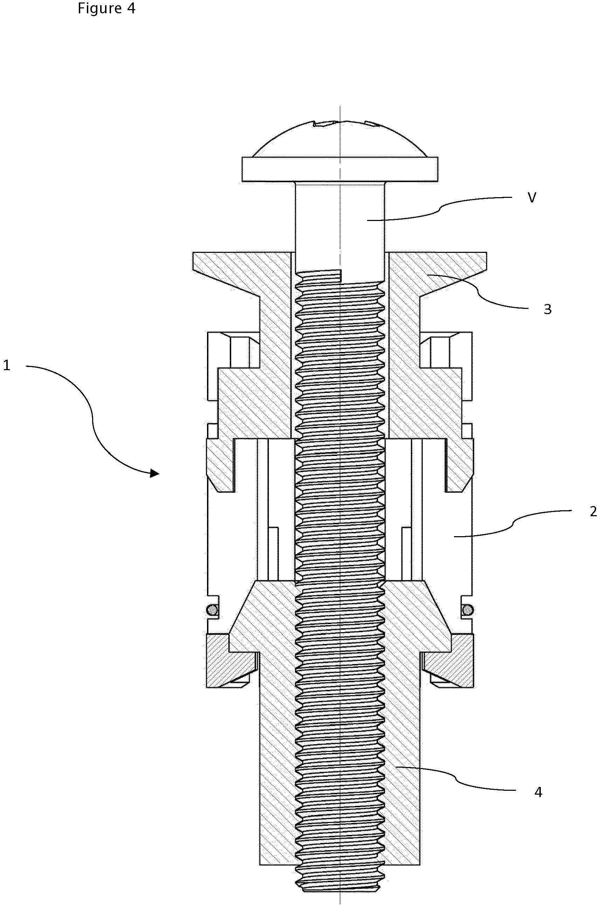

Figure 4 is an angular cross-sectional view of the inventive dowel in the attached state.

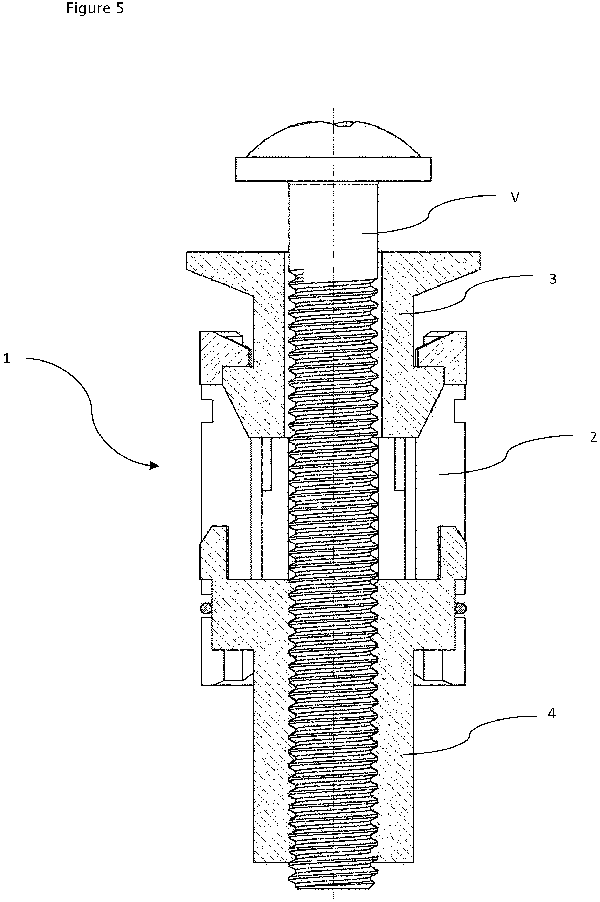

Figure 5 is an angular cross-sectional view of the inventive dowel in the attached state.

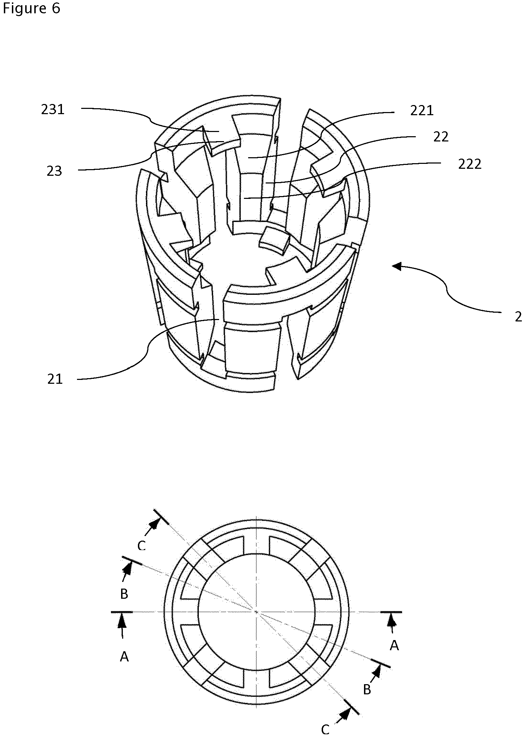

Figure 6 is the perspective view of the inventive main piece.

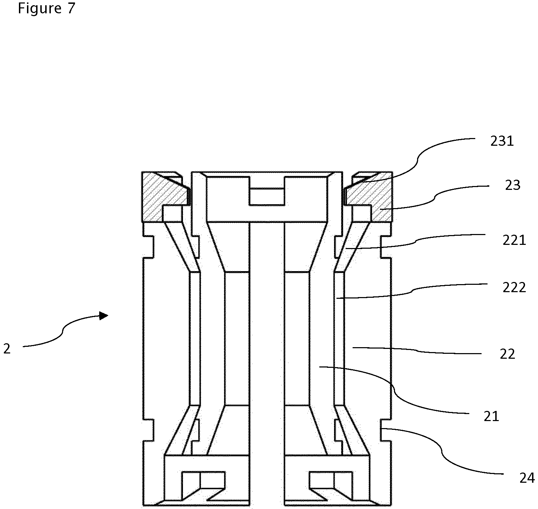

Figure 7 is the A-A sectional view of the inventive main piece.

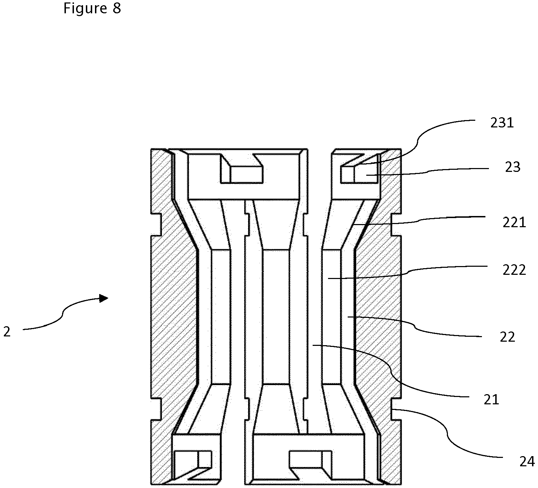

Figure 8 is the B-B sectional view of the inventive main piece.

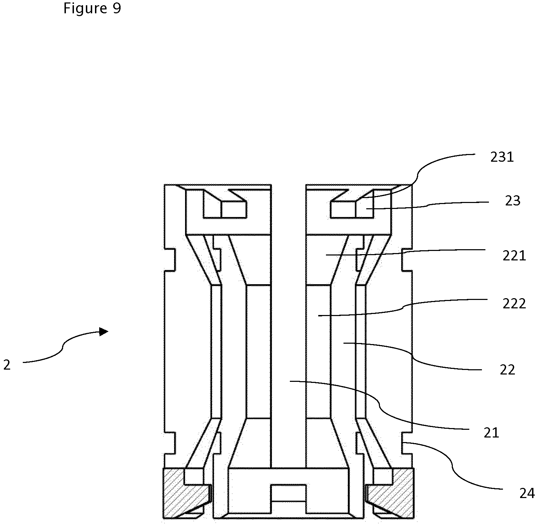

Figure 9 is the C-C sectional view of the inventive main piece.

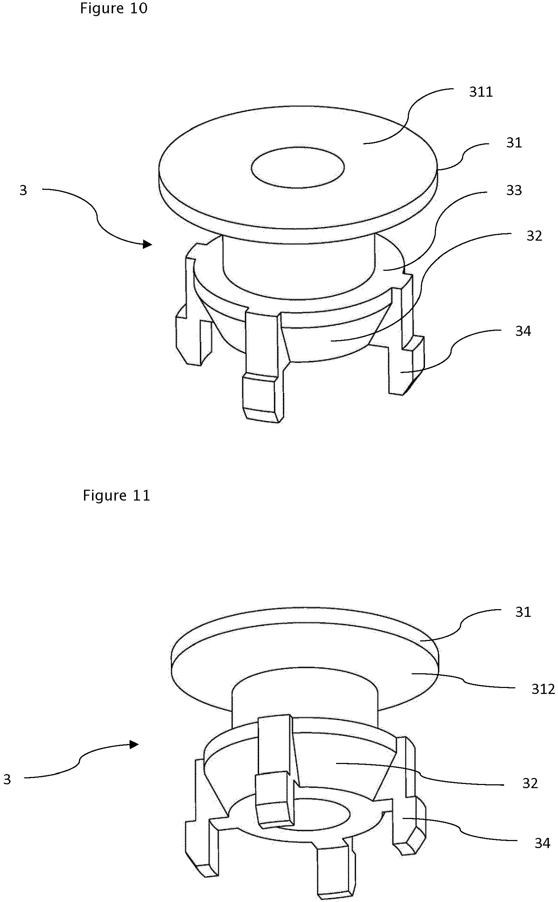

Figure 10 is the view of the inventive upper clamping piece.
Figure 11 is the view of the inventive upper clamping piece.

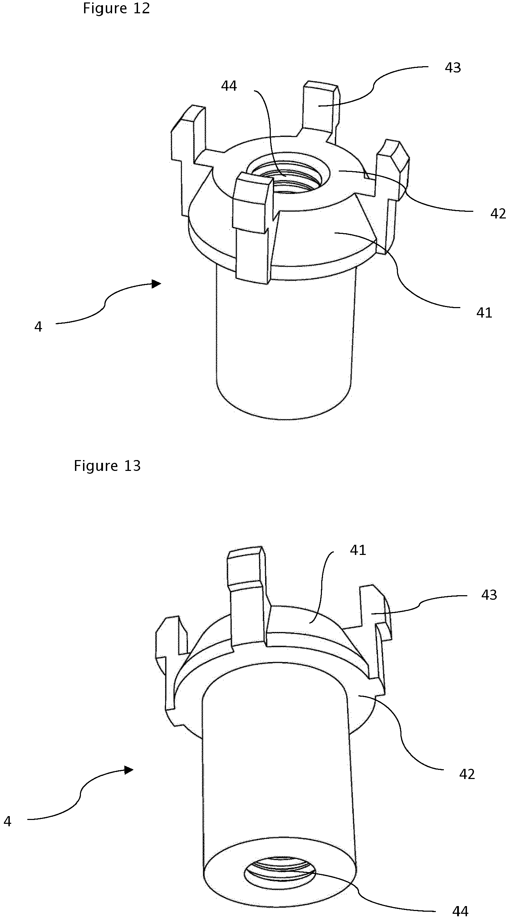

Figure 12 is the view of the inventive lower clamping piece.
Figure 13 is the view of the inventive lower clamping piece.

The components shown in the figures are each given reference numerals as follows:
1. Dowel
2. Main piece
   21. Groove
   22. Vertical protrusion
      221. Primary conical surface
      222. Limiting surface
   22. Groove
   23. Horizontal protrusion
      231. Secondary conical surface
   24. Channel
3. Upper clamping piece
   31. Head
      311. Upper surface
      322. Lower surface
   32. Primary conical part
   33. Primary flat surface
   34. Primary extension
4. Lower clamping piece
   41. Secondary conical part
   42. Secondary flat surface
   43. Secondary extension
   44. Threaded area
5. Elastic member
V. Screw (bolt)
A. A-A sectional view
B. B-B sectional view
C. C-C sectional view

The inventive dowel; which can be used in holes with different types of surfaces, different sizes and different depths, which can be expanded from both ends, and which is reusable; essentially comprises
- At least one screw (V),
- At least one main piece (2) which is cylindrical, has a cylindrical space therein, and comprises a plurality of grooves (21), a plurality of horizontal protrusions (22) and a plurality of vertical protrusions (23),
   - At least one upper clamping piece (3) which is cylindrical, comprises a hole through which the screw (V) can freely pass, which is fitted into the main piece (2) from its one end by snap-fitting the main piece (2), which enables being tightened into a mounting hole and removing from the hole by the main piece (2) expanding and shrinking, and comprises at least one head (31), at least one primary conical part (32), at least one primary flat surface (33), and a plurality of primary extensions (34),
   - At least one lower clamping piece (4) which is cylindrical, comprises a threaded area (44) through which the screw (V) passes by rotating, which is fitted into the main piece (2) from its other end by locking by means of flexing the main piece (2), which enables being tightened into a mounting hole and removing from the hole by the main piece (2) expanding and shrinking, and comprises at least one secondary conical part (41), at least one secondary flat surface (42), and a plurality of primary extensions (43),
   - A plurality of grooves (21) which are aligned on the main piece (2), and limit the rotary motion of the upper clamping piece (3) and the lower clamping piece (4),
   - A plurality of vertical protrusions (22) which are provided on the inner surface of the main piece (2), extending parallel to the central axis of the main piece (2), and enable to increase the wall thickness and enable the upper clamping piece (3) and the lower clamping piece (4) to expand the main piece (2),
- A plurality of horizontal protrusions (23) which are provided at the ends of the main piece (2), extend from the inner surface of the main piece (2) towards the center of the main piece (2), and enable the upper clamping piece (3) and the lower clamping piece (4) to be fitted into the main piece (2) by snap-fitting,
- At least one channel (24) which is provided on the main piece (2), and enables an element to be placed therein in order to support shrinking movement,
- A plurality of primary conical surfaces (221) which are provided on the vertical protrusion (22), define the limits of the position of the upper clamping piece (3) and the lower clamping piece (4) inside the main piece (2), enable the main piece (2) to be expanded and shrunken by remaining in contact with the upper clamping piece (3) and the lower clamping piece (4), and have a certain conicity value,
- A plurality of limiting surfaces (222) which are provided on the vertical protrusion (22) and limit the space inside the main piece (2),
- A plurality of secondary conical surfaces (231) which are provided on the horizontal protrusion (23), make it easy for the upper clamping piece (3) and the lower clamping piece (4) to be placed inside the main piece (2), have certain conicity value, and limit the movement of the upper clamping piece (3) when they contact the upper clamping piece (3),
- At least one head (31) which is provided on the upper clamping piece (3), one upper surface (311) of which provides relation with an object to be mounted, and one lower surface (312) of which limits the movement of the upper clamping piece (3) when it contacts the secondary conical surface (231),
- At least one primary conical part (32) which is provided on the upper clamping piece (3) and enables the main piece (2) to be expanded,
- At least one primary flat surface (33) which is provided on the upper clamping piece (3) and enables snap-fitting to the main piece (2),
- A plurality of primary extensions (34) which are provided on the upper clamping piece (3), define the position relation around the shared central axis belonging to the main piece (2), the upper clamping piece (3) and the lower clamping piece (4) by entering into the grooves (21), prevent rotation, and allow expanding and shrinking movements of the main piece (2) by moving inside the grooves (21),
- At least one secondary conical part (41) which is provided on the lower clamping piece (4) and enables the main piece (2) to be expanded,
- At least one secondary flat surface (42) which is provided on the lower clamping piece (4) and enables snap-fitting to the main piece (2),
- A plurality of secondary extensions (43) which are provided on the lower clamping piece (4), define the position relation around the shared central axis belonging to the main piece (2), the upper clamping piece (3) and the lower clamping piece (4) by entering into the grooves (21), prevent rotation, and allow expanding and shrinking movements by moving inside the grooves (21),
- At least one threaded area (44) which is provided inside the lower clamping piece (4) and enables the screw (V) to move,
- At least one elastic member (5) which is provided inside the channel (24), and helps the main piece (2) to shrink and return to its initial state before mounting by main piece (2) being loosened in order to be removed from its place by a force applied

The inventive dowel (1) has a preferably relatively rigid body material in order to enable to hold in the holes with glass-like surfaces. Therefore, it transfers a quite high contact pressure on the glass-like surface.

The wall thicknesses of the main piece (2) of the dowel (1) are increased as much as possible so that the high contact pressure generated during mounting reaches the hole surface in the highest rate and the material does not deformed permanently. By this means, in mountings to be performed especially in holes with smaller depth than the length of the dowel (1), it is enabled that the main piece (2) of the dowel (1) does not get damaged.

The main piece (2) of the dowel (1) is provided to be expanded both from the upper part and from the lower part, so as to achieve in both deep holes and less deep holes. The said expansion is performed both from the top and the bottom at the same time in deep holes. In the holes the depths of which are less than the length of the dowel (1), it is enabled to perform expansion in higher ratio with the lower clamping piece (4)-especially in the part outside the hole.

The upper clamping piece (3) and the lower clamping piece (4) which provide the tightening in the dowel (1) are retracted with the screw/bolt V released and the dowel (1) is enabled to return its initial state before mounting. In order to ensure that the dowel (1) returns to its pre-mounting state, there is an elastic member (5), which is an elastic collet or a wire ring that is located on the outside of the main piece (2) of the dowel (1) and supports the return. In this case, it is possible to remove the dowel from the hole and use it again.

In the inventive dowel (1), the main piece (2) and the clamping pieces are connected to each other. By means of the relations of the extensions (34 and 43) provided on the clamping pieces with the main piece (2) of the dowel (1), especially it is prevented that the piece performing clamping with the screw/bolt (V) becomes rotating with the screw/bolt (V) inside the main piece (2).

In a preferred embodiment of the inventive dowel, the main piece (2) has a cylindrical volume. Diameter and length dimensions of this cylindrical volume are determined according to the diameter and depth information of the hole targeted by the application and the limits of the hole sizes are within the range in which the targeted function in the tolerance range can be successfully performed. In the interior of the main piece (2) there is a cylindrical space, and there are details (221, 222, 23) in this space defining relations with the clamping pieces (3 and 4) which enable the piece to expanded. There are grooves (21) on the body of the main piece (2) with a cylindrical arrangement. These grooves enable the expansion to be performed before reaching the permanent deformation limit, and also limit the movements of the clamping pieces (3 and 4). The symmetrical arrangement of the grooves enables the most suitable expansion.

At both ends of the inventive main piece (2), there is a secondary conical surface (232) on the horizontal protrusion (23) aiming to make the passing of the clamping pieces (3 and 4) easy during mounting.

The surface (221), which is present in the inner space of the main piece (2) and has a certain degree of conicity, is in contact with the clamping pieces (3 and 4). The expansion or shrinking of the main piece (2) according to the changing positions of the clamping pieces (3 and 4) is provided via the said surface (221). The surfaces (222) limiting the space in the inside of the main piece (2) of the dowel (1) provide the maximum wall thickness of the piece according to the appropriate design criteria for production by plastic injection. Increasing the wall thicknesses of the main piece (2) allow preventing the permanent deformation.

In the preferred embodiment of the invention, the production of the main piece (2), the upper clamping piece (3) and the lower clamping piece (4) is carried out by the plastic injection molding method. Plastic raw materials such as POM (Polyoxymethylene), PA (Polyamide), PP (Polypropylene) can be preferred for the main piece. It is possible to add various reinforcements or combinations with different raw materials in order to change the mechanical properties of the raw materials. In the selections, the priority is both to provide elasticity below the permanent deformation limit and to make the function of holding the dowel in the hole under the axial loads most successful.

The clamping pieces (3 and 4) are placed inside the main piece (2) with snap-fitting relation from both ends of the main piece (2) of the dowel (1). The upper clamping piece (3) is formed inside a cylindrical volume. There is a head (31) on the upper part of the piece (3). There is a cylindrical body structure extending below the head (31), primary conical surface (32) enabling the expansion/shrinking on the main piece (2), and extensions (34) on the conical surface (32) enabling the connection of the piece (3) with the grooves (21) provided on the body of the main piece (2).

The upper surface (311) of the head (31) belonging to the upper clamping piece (3) is the surface providing relation with the dowel (1) and an objected mounted into the hole. When the lower surface (312) of the hole contacts the secondary conical surface (231), it enables to limit the movement along the central axis of the main piece (2). This limitation is also the limit of the expansion of the dowel (1) from the upper part. The diameter of the head (31) has a certain size depending on the diameter of the hole to which the dowel (1) is connected. This measurement difference prevents the dowel from falling into the hole, in other words it enables the dowel to remain in the surface level of the hole in which it is present. This part is kept inside the dowel (1) by means of snap-fitting relation between the primary flat surface (33) and the horizontal protrusions (23) provided at the rim of the main piece (2).

There is a hole all along the middle of the upper clamping piece (3). The diameter of the said hole is larger than the nominal diameter of the bolt/screw (V) of the dowel. In the dowel (1) which is mounted, the bolt/screw (V) passes through the said hole freely, and it is connected to the lower clamping piece (4).

The lower clamping piece (4) is formed inside a cylindrical volume. There is a cylindrical structure and details providing function on the upper part of the piece (4). The conical part (41) of the piece (4) enables the main piece (2) to be expanded and shrunken. The primary extensions (43) provided on the primary conical part (41) provide connection with the grooves (21) on the main piece (2) body, and prevent the piece from making free rotary movements upon turning the bolt/screw (V). Because, the part to which the bolt/screw (V) provides direct linear movement is the lower clamping piece (4). The hole extending all along inside the lower clamping piece (4) has a threaded area (44) compatible with the bolt/screw (V). The threaded area (44) can be an additional piece that can be mounted to the lower clamping piece (4). The lower clamping piece (4) is kept inside the main piece (2) by means of the snap-fitting relation of the secondary flat surface (42) and the secondary conical surfaces (231) of the main piece.

The length of the cylindrical body structure of the lower clamping piece (4) is determined to be suitable for forming a number of internal threads that can balance the high contact pressure which is generated by the bolt/screw (V) compressing. The said length can vary according to the mechanical properties of the material to be used in production of the piece. The material selection of the lower clamping piece (4) is also related to the threaded area (44) that is in connection with the bolt/screw.

The use of the dowel (1) in a deep hole is as follows: Here, the holes higher than the length of the dowel (1) are meant by deep hole.
In mounting dowel (1) in deep holes, all of the dowel (1) is free inside the hole structure. When the bolt/screw (V) is turned, the lower clamping piece (4) is retracted upwards, in other words towards the upper clamping piece (3). In the meantime, there is an increasing contact pressure between the lower clamping piece (4) and the dowel (1) main piece (2). The main piece (2) expands with increasing contact pressure between the upper clamping piece (3) and the lower clamping piece (4). The contact pressure transferred to the hole surface by rotating the bolt/screw (V) with a certain torque value ensures homogeneous expansion of the main piece (2) and sufficient compression to complete the mounting.

The elastic collet or wire ring (5) provided in the channel (24) on the main piece (2) helps to return the main piece (2) back into its original state before mounting, to shrink. By this means, the dowel (1) can be easily removed from the hole and easily reused.

The use of the dowel (1) in a hole that is not deep is as follows: Here, the holes shorter than the length of the dowel (1) are meant by holes that are not deep.
In the mounting of the dowel (1) in the holes whose depth is less than the length of the dowel (1), a part of the main piece (2) is free in the hole structure. A part of the main piece remains downwards from the hole. When the bolt/screw (V) is turned, the lower clamping piece (4) is retracted upwards, in other words towards the upper clamping piece (3). In the meantime, there is an increasing contact pressure between the lower clamping piece (4) and the dowel (1) main piece (2). The main piece (2) expands with increasing contact pressure between the upper clamping piece (3) and the lower clamping piece (4). This expansion takes place mainly by the upward movement of the lower clamping piece (4) and the part of the main piece (2) outside of the hole expands and becomes tapered. Attachment takes place at the edge of the hole with a high contact pressure. The contact pressure transferred to the hole structure by rotating the bolt/screw (V) with a certain torque value ensures nonhomogeneous expansion of the main piece (2) of the dowel (1) and enables the part remaining outside to expand in a conic shape and to generate a sufficient compression and thus the mounting to be completed. The increased wall thicknesses of the dowel (1) main piece (2) prevent these kinds of holes from getting damaged with contact pressure increasing at the edge lines, and being subjected to permanent deformation.

The elastic member or wire ring (5) provided in the channel (24) on the main piece (2) of the dowel (1) helps to return the main piece (2) back into its initial state before mounting, to shrink. By this means, the dowel (1) can be easily removed from the hole and easily reused.

In a preferred embodiment of the invention, four grooves (21) extending from each end portion of the main part (2), in total 8 grooves are formed. In alternative embodiments of the invention, it may be possible to increase or decrease the number of these grooves (21) according to the target hole dimensions to be used by the dowel (1). This determination, which may be the case for alternative embodiments, may be possible by making related details of the clamping pieces (3 and 4) positioned within the channels compatible.

In the preferred embodiment of the invention, polymer materials such as POM, PA, PP may be preferred. It is possible to make reinforcements with various additives, or to form combinations with different raw materials. It is known that polymeric materials will be suitable since the main piece (2) of the dowel is aimed to be expanded by flexing or shrinking, materials which do not allow this behavior cannot be preferred. However, there is no need for resilience in the clamping pieces (3 and 4), including for snap-fitting by flexing relation. For this reason, in another preferred embodiment of the invention, for example, metal materials may be preferred according to embodiment requirements. The relatively complicated details of the clamping pieces (3 and 4) substantially eliminate the applicability of machining. However, alloys which can enable production by metal injection molding methods may be preferred.

In the preferred embodiment of the invention, an elastic ring (5) is preferably used as the element provided in the channel (24) of the outer surface of the dowel (1) main piece (2) and enabling returning. However, in another preferred embodiment of the invention, it is also preferred to use a wire ring (5) according to the embodiment requirements. In the case of the use of the wire ring (5), it is possible to prefer a winding ratio which is greater than or more than one according to the proportional requirement needed for the expansion of the main piece (2) of the dowel (1).
The invention dowel (1) can be used in the health, machinery, construction, automotive and furniture sectors.

## Claims

1. A dowel (1); which can be used in holes with different types of surfaces, different sizes and different depths, which can be expanded from both ends, and which is reusable; essentially **characterized by**
- At least one main piece (2) which is cylindrical, has a cylindrical space therein, and comprises a plurality of grooves (21), a plurality of horizontal protrusions (22) and a plurality of vertical protrusions (23),
- At least one upper clamping piece (3) which is cylindrical, comprises a hole through which the screw (V) can freely pass, which is fitted into the main piece (2) from its one end by snap-fitting the main piece (2), which enables being tightened into a mounting hole and removing from the hole by the main piece (2) expanding and shrinking, and comprises at least one head (31), at least one primary conical part (32), at least one primary flat surface (33), and a plurality of primary extensions (34),
- At least one lower clamping piece (4) which is cylindrical, comprises a threaded area (44) through which the screw (V) passes by rotating, which is fitted into the main piece (2) from its other end by locking by means of flexing the main piece (2), which enables being tightened into a mounting hole and removing from the hole by the main piece (2) expanding and shrinking, and comprises at least one secondary conical part (41), at least one secondary flat surface (42), and a plurality of primary extensions (43),
- A plurality of grooves (21) which are aligned on the main piece (2), and limit the rotary motion of the upper clamping piece (3) and the lower clamping piece (4),
- A plurality of vertical protrusions (22) which are provided on the inner surface of the main piece (2), extend parallel to the central axis of the main piece (2), and enable to increase the wall thickness and enable the upper clamping piece (3) and the lower clamping piece (4) to expand the main piece (2),
- A plurality of horizontal protrusions (23) which are provided at the ends of the main piece (2), extend from the inner surface of the main piece (2) towards the center of the main piece (2), and enable the upper clamping piece (3) and the lower clamping piece (4) to be fitted into the main piece (2) by snap-fitting,
- At least one channel (24) which is provided on the main piece (2), and enables an element to be placed therein in order to support shrinking movement,
- At least one elastic member (5) which is provided inside the channel (24), and helps the main piece (2) to shrink and return to its initial state before mounting by main piece (2) being loosened in order to be removed from its place by a force applied.

2. A dowel (1) according to claim 1, **characterized by** a plurality of primary conical surfaces (221) which are provided on the vertical protrusion (22), define the limits of the position of the upper clamping piece (3) and the lower clamping piece (4) inside the main piece (2), enable the main piece (2) to be expanded and shrunken by remaining in contact with the upper clamping piece (3) and the lower clamping piece (4), and have a certain conicity value.

3. A dowel (1) according to claim 1, **characterized by** a plurality of limiting surfaces (222) which are provided on the vertical protrusion (22) and limit the space inside the main piece (2).

4. A dowel (1) according to claim 1, **characterized by** a plurality of secondary conical surfaces (231) which are provided on the horizontal protrusion (23), make it easy for the upper clamping piece (3) and the lower clamping piece (4) to be placed inside the main piece (2), have certain conicity value, and limit the movement of the upper clamping piece (3) when they contact the upper clamping piece (3).

5. A dowel (1) according to claim 1, **characterized by** at least one head (31) which is provided on the upper clamping piece (3), one upper surface (311) of which provides relation with an object to be mounted, and one lower surface (312) of which limits the movement of the upper clamping piece (3) when it contacts the secondary conical surface (231).

6. A dowel (1) according to claim 1, **characterized by** at least one primary flat surface (33) which is provided on the upper clamping piece (3) and enables snap-fitting to the main piece (2).

7. A dowel (1) according to claim 1, **characterized by** a plurality of primary extensions (34) which are provided on the upper clamping piece (3), define the position relation around the shared central axis belonging to the main piece (2), the upper clamping piece (3) and the lower clamping piece (4) by entering into the grooves (21), prevent rotation, and allow expanding and shrinking movements of the main piece (2) by moving inside the grooves (21).

8. A dowel (1) according to claim 1, **characterized by** at least one secondary flat surface (42) which is provided on the lower clamping piece (4) and enables snap-fitting to the main piece (2).

9. A dowel (1) according to claim 1, **characterized by** a plurality of secondary extensions (43) which are provided on the lower clamping piece (4), define the position relation around the shared central axis belonging to the main piece (2), the upper clamping piece (3) and the lower clamping piece (4) by entering into the grooves (21), prevent rotation, and allow expanding and shrinking movements of the main piece (2) by moving inside the grooves (21).

10. A dowel (1) according to claim 1, **characterized by** elastic member (5) which is an elastic collet or a wire ring.

11. A dowel (1) according to claim 10, **characterized by** wire ring which comprises one wrapping or a plurality of wrappings according to the mounting hole and required expansion ratio of the main piece (2).

12. A dowel (1) according to claim 1, **characterized by** the main piece (2), the upper clamping piece (3) and the lower clamping piece (4) which are manufactured with injection moulding or machining methods.

13. A dowel (1) according to claim 1, **characterized by** the main piece (2), the upper clamping piece (3) and the lower clamping piece (4) which are manufactured from POM (Polyoxymethylene), PA (Polyamide), PP (Polypropylene) material.

14. A dowel (1) according to claim 1, **characterized by** head (31) the diameter of which is larger relative to a mounting hole diameter, and which enables to remain on the hole surface.

15. A dowel (1) according to claim 1, **characterized by** threaded area (44) which is an additional piece that can additionally be mounted to the lower clamping piece (4).
